(19) **Europäisches Patentamt / European Patent Office / Office européen des brevets**

(11) **EP 3 013 763 B1**

(12) **FASCICULE DE BREVET EUROPEEN**

(45) Date de publication et mention de la délivrance du brevet:
**26.02.2020 Bulletin 2020/09**

(51) Int Cl.:
***C03C 17/36*** *(2006.01)*

(21) Numéro de dépôt: **14733191.2**

(22) Date de dépôt: **27.06.2014**

(86) Numéro de dépôt international:
**PCT/EP2014/063634**

(87) Numéro de publication internationale:
**WO 2014/207171 (31.12.2014 Gazette 2014/53)**

(54) **VITRAGE ANTISOLAIRE**

SONNENSCHUTZVERGLASUNG

SOLAR PROTECTION GLAZING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2013 BE 201300453**

(43) Date de publication de la demande:
**04.05.2016 Bulletin 2016/18**

(73) Titulaire: **AGC Glass Europe**
**1348 Louvain-La-Neuve (BE)**

(72) Inventeurs:
• **MAHIEU, Stijn**
  **B-9920 Lovendegem (BE)**
• **DI STEFANO, Gaëtan**
  **B-1421 Ophain-Bois-Seigneur-Isaak (BE)**
• **HAUPTMANN, Marc**
  **2300 Turnhout (BE)**
• **DUMONT, Jacques**
  **B-5537 Bioul (BE)**

(74) Mandataire: **Agustsson, Sveinn Otto et al**
**AGC Glass Europe S.A.**
**Rue Louis Blériot, 12**
**6041 Gosselies (BE)**

(56) Documents cités:
**WO-A1-2012/095380     FR-A1- 2 799 005**
**US-A1- 2006 046 089**

EP 3 013 763 B1

**Description**

**1. Domaine de l'invention.**

Le domaine de l'invention est celui des vitrages de contrôle solaire constitués d'un substrat verrier portant un empilage multicouches, dont au moins une couche mince confère les dites propriétés de contrôle solaire. A cette couche fonctionnelle sont associées des couches diélectriques qui ont pour rôle notamment de régler les propriétés de réflexion, de transmission, de teinte et de protection contre les altérations mécaniques ou chimiques des propriétés de l'empilement.

Plus précisément, l'invention concerne les vitrages destinés à garnir les bâtiments mais également les véhicules automobiles. Selon ces utilisations certaines propriétés requises peuvent différer.

Les fonctionnalités des vitrages de contrôle solaire sont multiples. Elles concernent notamment la prévention de l'échauffement de l'intérieur de l'habitacle d'un véhicule automobile, en particulier vis-à-vis du rayonnement solaire traversant un toit transparent, ou d'un bâtiment exposé au rayonnement solaire lorsque celui-ci est suffisamment intense. Selon certaines formes de réalisation, cette prévention de l'échauffement peut être obtenue tout en maintenant une transmission lumineuse appropriée.

Dans le cas notamment des vitrages pour bâtiments, mais aussi pour l'automobile, il est de plus en plus souvent demandé qu'ils soient susceptibles de supporter des traitements thermiques sans que leur couleur notamment en réflexion soit modifiée de manière sensible. L'objectif est de pouvoir disposer côte à côte des vitrages traités thermiquement et d'autres ne l'ayant pas été, sans que des différences de couleur soient manifestes.

Dans la suite de la description, les propriétés optiques sont définies pour des vitrages dont le substrat est en verre "float" ordinaire clair de 4 mm d'épaisseur. Le choix du substrat influence bien évidemment ces propriétés. Pour le verre clair ordinaire la transmission lumineuse sous 4 mm, en l'absence de couche, se situe approximativement à 90% et la réflexion à 8%, mesurée avec une source conforme à l'illuminant « lumière du jour » normalisé D65 par la CIE et sous un angle solide de 2°. Les mesures énergétiques, quant à elles, sont faites suivant la norme EN 410.

Par le terme « verre », on entend désigner un verre inorganique. On entend par là un verre d'épaisseur au moins supérieure ou égale à 0,5 mm et au plus inférieure ou égale 20,0 mm, préférentiellement au moins supérieure ou égale à 1.5 mm et au plus inférieure ou égale à 10,0 mm, comprenant du silicium comme l'un des constituants indispensables de la matière vitreuse. Pour certaines applications, l'épaisseur peut par exemple être de 1,5 ou 1,6 mm, ou de 2 ou 2,1 mm. Pour d'autres applications, elle sera par exemple aux environs de 4 ou de 6 mm. On préfère les verres silico-sodocalciques clairs, extra-clairs ou colorés dans la masse ou en surface.

La présence d'un empilage multicouches peut poser des problèmes de couleur. Le plus souvent le marché demande que les vitrages offrent, aussi bien en transmission qu'en réflexion, une coloration aussi neutre que possible et donc d'apparence grise. Des colorations légèrement vertes ou bleutées sont aussi possibles. Toutefois, des teintes nettement plus prononcées, par exemple bleue ou verte, sont aussi parfois demandées pour satisfaire des critères esthétiques particuliers. Les empilages multicouches, et en particulier les natures, indices et épaisseurs des couches diélectriques encadrant les couches fonctionnelles, sont choisis notamment pour maîtriser ces colorations.

Les vitrages automobiles, en théorie peuvent être multiples pour leur conférer une meilleure propriété d'isolation notamment thermique. En fait ces réalisations sont exceptionnelles. L'immense majorité de ces vitrages est constituée de vitrages uniques, soit monolithiques soit feuilletés. L'empilage multicouches peut être sur une face qui n'est pas à l'abri de sollicitations mécaniques ou chimiques. Les empilages en question doivent donc présenter une très bonne résistance à ces possibles agressions.

En pratique pour limiter les risques d'altération, les empilages multicouches sont normalement sur la face du vitrage tournée vers l'habitacle. Mais même dans cette position ils doivent offrir une très bonne résistance mécanique.

Les systèmes de couches selon l'invention doivent encore se prêter aux mises en forme des vitrages. Ceux utilisés dans les véhicules sont notamment l'objet de traitements thermiques lors du formage, notamment du bombage des feuilles de verre, ou encore lors de la trempe destinée à leur conférer notamment des propriétés mécaniques renforcées. Les couches utilisées selon l'invention doivent supporter ces traitements sans que leurs propriétés soient dégradées. Des traitements de ce type imposent des températures qui dépassent 600°C pendant une dizaine de minutes. Soumis à ces températures les couches doivent conserver leurs qualités et propriétés.

L'aspect esthétique revêt aussi une grande importance commerciale pour les vitrages de protection solaire. En effet, il n'est pas seulement demandé que le vitrage possède des propriétés thermiques antisolaires, on demande aussi qu'il participe à la qualité esthétique de l'ensemble dont il fait partie. Ces critères esthétiques peuvent parfois engendrer des situations quelques peu conflictuelles avec l'obtention des meilleures propriétés thermiques recherchées.

**2. Solutions de l'art antérieur.**

L'art antérieur propose des vitrages antisolaires comportant une couche absorbant le rayonnement solaire entourée de couches diélectriques.

La demande de brevet EP 779 255 A1 décrit un substrat en verre revêtu d'une couche absorbant le rayonnement solaire en NiCr entourée de couches diélectriques $Si_3N_4$ qui peut supporter un traitement thermique à température élevée.

Le brevet US 6,852,419 B2 décrit un vitrage antisolaire comportant un empilage formé d'une couche absorbant le rayonnement solaire en NbCrNx entourée de revêtement diélectriques $Si_3N_4$. Cet empilage est capable de supporter un traitement thermique à température élevée.

La demande de brevet FR 2 869 606 A1 décrit un vitrage antisolaire comportant un empilage formé d'une couche absorbant le rayonnement solaire en Nb entourée de revêtement diélectriques $Si_3N_4$. L'empilage peut également supporté un traitement thermique à température élevé. WO2012095380 décrit des vitrages à contrôle solaire comportant des séquences de couches du type: 1er diélectrique / couche fonctionnelle absorbante à base de W / 2e diélectrique. US20060046089 concerne des vitrages comportant une séquence de couches du type: 1er diélectrique / couche fonctionnelle absorbante / 2ème diélectrique. FR2799005 concerne un vitrage à contrôle solaire portant une séquence de couches du type: 1er diélectrique / couche fonctionnelle absorbante / 2e diélectrique optionnel.

Les propositions antérieures répondent en partie au moins aux exigences de l'utilisation envisagée des vitrages selon l'invention, en particulier aux propriétés thermiques antisolaires. Néanmoins, leur propriété esthétique doit encore être améliorée pour satisfaire certaines demandes commerciales.

## 3. Objectifs de l'invention

L'invention a notamment pour objectif de pallier cet inconvénient de l'art antérieur.

Plus précisément, un objectif de l'invention est de fournir un vitrage muni d'un empilage multicouches à propriété antisolaire qui procure de plus un aspect esthétique favorable à l'ensemble dans lequel il est installé, et qui soit de fabrication simple et peu couteuse, notamment avec un minimum de couches.

Un objectif de l'invention, dans au moins un de ses modes de réalisation, est aussi de fournir un vitrage muni d'un empilage multicouches à propriétés antisolaire et esthétique qui soit apte à subir un traitement thermique à température élevée, de type trempe et/ou bombage, de préférence sans modification significative de sa teinte, en particulier en réflexion côté substrat, de telle sorte qu'un vitrage non traité thermiquement puisse être juxtaposée avec sa version traitée thermiquement sans qu'un observateur puisse détecter une différence significative de l'aspect esthétique globale.

L'invention, dans au moins un de ses modes de réalisation, a encore pour objectif de fournir un vitrage muni d'un empilage multicouches présentant une bonne stabilité du point de vue thermique, chimique et mécanique.

L'invention, dans au moins un de ses modes de réalisation, a aussi pour objectif de fournir un vitrage dont l'empilage multicouches puisse être placé en position externe sans devoir nécessairement être protégé de l'environnement externe par un autre substrat.

## 4. Exposé de l'invention.

L'invention se rapporte à un vitrage transparent de contrôle solaire comportant sur au moins l'une des faces d'un substrat verrier un empilage multicouches transparent comprenant une couche absorbant le rayonnement solaire d'au moins 3 nm d'épaisseur géométrique et des premier et second revêtements diélectriques encadrant ladite couche absorbant le rayonnement solaire, caractérisé en ce que la réflexion lumineuse du substrat verrier revêtu de l'empilage multicouche mesurée du côté du substrat est d'au moins 20% et est au moins le double de la réflexion lumineuse du substrat verrier revêtu de l'empilage multicouche mesurée du côté de l'empilage, et en ce que la teinte en réflexion côté substrat présente une valeur de la coordonnée colorimétrique a* (L*a*b* CIE) inférieure à 2 et une valeur de la coordonnée colorimétrique b* inférieure à 5.

Cette nouvelle caractéristique se rapportant à la réflexion lumineuse va à l'encontre de la pratique courante selon laquelle les réflexions lumineuses ne sont pas fort différentes l'une de l'autre.

On a découvert que cette combinaison de caractéristique est avantageuse en ce qu'elle procure, de manière surprenante, un effet esthétique appréciable et apprécié, tout en conservant une visibilité suffisante à partir de l'intérieur de l'espace fermé par le vitrage vers l'extérieur et en évitant un effet miroir désagréable vu de l'intérieur.

La couche absorbant le rayonnement solaire, c'est-à-dire la couche fonctionnelle de l'empilage, a une épaisseur géométrique d'au moins 3 nm, de préférence d'au moins 5 nm et avantageusement d'au moins 10 nm. Cette épaisseur joue un rôle déterminant sur la transmission lumineuse et le facteur solaire du vitrage. L'épaisseur doit être suffisante, au moins 3 nm, pour obtenir un effet significatif. Son réglage permet ensuite d'ajuster les propriétés aux valeurs désirées.

Par « couche absorbant le rayonnement solaire », on entend, dans la présente invention, une couche formée d'un métal, ou d'un alliage métallique, ou d'un nitrure de métal, ou d'un nitrure d'alliage métallique, ayant un coefficient d'extinction moyen, entre 380 nm et 750 nm, supérieur à 0,8, de préférence, supérieur à 1,2 et avantageusement supérieur à 1,4.

Les revêtements diélectriques encadrant la couche absorbant le rayonnement solaire comprennent, de préférence, au moins une couche en un matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium,

La ou les couches formant le revêtement en matériau diélectrique peuvent également être des couches dopées avec au moins un autre élément, contenant jusqu'à environ maximum 10% poids de cet autre élément, ces dernières présentant des propriétés diélectriques ne différant en pratique pas des couches consistant en ledit matériau diélectrique. Ainsi par exemple, lorsque la couche est en nitrure de silicium celle-ci peut contenir jusqu'à 10% en poids d'aluminium (par exemple, des couches déposées par procédé de pulvérisation cathodique à partir d'une cible de silicium contenant jusqu'à 10% poids d'aluminium). Les revêtements diélectriques peuvent en outre être constitués de plusieurs couches individuelles comprenant ou consistant essentiellement en ces mêmes matériaux. Les couches diélectriques peuvent aussi être déposées par la technique bien connue appelée PECVD (« Plasma-Enhanced Chemical Vapor Deposition ») ou dépôt chimique en phase vapeur assisté par plasma.

La couche absorbant le rayonnement solaire, qui est la couche fonctionnelle, est entourée de revêtements diélectriques. Cela ne veut pas dire que ces revêtements diélectriques doivent nécessairement être en contact direct avec la couche fonctionnelle, car il peut y avoir des fines couches intercalaires pour divers raisons, mais ils doivent être dans le voisinage immédiat de la couche fonctionnelle. Chacun des revêtements diélectriques peut être une monocouche, mais chacun des revêtements diélectriques peut aussi comprendre plusieurs couches de matériaux différents. Toutefois, chacun des dits revêtements diélectriques contiendra toujours, de préférence, au moins 10 nm d'un des matériaux diélectriques choisis parmi l'oxyde, l'oxynitrure ou le nitrure de silicium, et l'oxyde, l'oxynitrure ou le nitrure d'aluminium. Les autres matériaux diélectriques peuvent être des matériaux à base d'oxydes de Zn, Sn, Ti, Zr, Nb, ou autres matériaux diélectriques bien connus dans le domaine, et en particulier le stannate de zinc.

De préférence, la réflexion lumineuse du substrat verrier revêtu de l'empilage multicouche mesurée du côté du substrat est au moins 2,5 fois, avantageusement d'au moins 3 fois, et préférentiellement d'au moins 3,5 fois, voire 4 fois, supérieure à la réflexion lumineuse du substrat verrier revêtu de l'empilage multicouche mesurée du côté de l'empilage. De préférence, la réflexion lumineuse mesurée côte substrat est supérieure d'au moins 14%, d'au moins 16%, de préférence d'au moins 20% et avantageusement d'au moins 25%, à la réflexion lumineuse mesurée côte empilage

On peut ainsi obtenir une réflexion lumineuse extérieure fort élevée procurant un effet esthétique très marqué tout en conservant une bonne visibilité au travers du vitrage vu à partir de l'intérieur de l'espace fermé par le vitrage.

Selon un mode préféré de réalisation de l'invention, la réflexion lumineuse mesurée du côté substrat est d'au moins 27%, de préférence d'au moins 30%, et avantageusement d'au moins 35%.

Pour obtenir une réflexion lumineuse élevée du côté du substrat et une différence élevée entre les réflexions des deux côtés du substrat revêtu, il y a différentes possibilités de réalisation. Un moyen efficace dans le cadre des vitrages transparents qui font l'objet de l'invention est d'influencer favorablement l'effet interférentiel entre les couches. Là aussi, différentes possibilités peuvent être envisagées. Mais l'effet interférentiel influence fortement les teintes obtenues en réflexion et transmission. De préférence, l'épaisseur optique virtuelle L du premier revêtement diélectrique, disposé entre le substrat et la couche absorbant le rayonnement solaire, à une valeur inférieure ou égale à 25 nm ou même inférieure ou égale à 20 nm, avantageusement inférieure ou égale à 17 nm, et préférentiellement inférieure ou égale à 15 nm. Cette caractéristique favorise l'obtention d'une réflexion lumineuse élevée du côté du substrat, tout en ayant la possibilité de conserver la teinte requise. De préférence, l'épaisseur optique virtuelle L du premier revêtement diélectrique est comprise entre 5 et 20 nm, avantageusement entre 10 et 20, et préférentiellement entre 12 et 16 nm. Ceci permet d'obtenir un bon compromis entre une forte différence de réflexion entre les deux faces, une teinte relativement neutre du côté substrat et un bonne résistance au traitement thermique.

L'épaisseur optique virtuelle L d'un revêtement diélectrique est définie, dans le cadre de la présente invention, comme étant la somme des épaisseurs géométriques (physiques) en nm de chacun des matériaux diélectriques formant le revêtement diélectrique multipliées par l'indice de réfraction n à 550 nm de chacun des matériaux diminué de l'indice de réfraction du gaz de l'atmosphère environnante. Pour un revêtement formé de plusieurs matériaux diélectriques différents, la valeur L s'obtient en faisant la somme des résultats des multiplications de l'épaisseur géométriques (e) en nm de chacun des matériaux par la valeur obtenue en soustrayant la valeur de l'indice de réfraction à 550 nm de l'atmosphère, en général de l'air, soit la valeur 1, de l'indice de réfraction n à 550 nm du matériau correspondant [$L = e \times (n_{D\,550} - n_{air\,550})$, avec $n_{D\,550}$ = indice de réfraction du matériau à 550 nm].

De préférence, le second revêtement diélectrique, disposée au-delà de la couche absorbant le rayonnement solaire par rapport au substrat, a une épaisseur totale virtuelle L comprise entre 35 et 85 nm, avantageusement entre 40 et 70 nm, et préférentiellement entre 45 et 65 nm et idéalement entre 50 et 60 nm, et l'indice de réfraction n moyen du revêtement est supérieur à 1,5. Cette caractéristique permet à la fois d'obtenir aisément à la fois une réflexion extérieure élevée et une réflexion intérieure faible, tout en ayant une teinte en réflexion extérieure acceptable et agréable esthétiquement.

Avantageusement, l'épaisseur optique virtuelle L du premier revêtement diélectrique est comprise entre 10 et 20 nm, et l'épaisseur totale virtuelle L du second revêtement diélectrique est comprise entre 45 et 65 nm, de préférence entre 50 et 60 nm. On réunit ainsi les meilleures conditions pour obtenir une haute réflexion côté substrat avec une faible réflexion côté couche et une teinte relativement neutre en réflexion côté substrat.

De préférence, l'épaisseur virtuelle L du premier revêtement diélectrique, disposée entre le substrat et la couche absorbant le rayonnement solaire, est au moins une fois et demi plus épaisse ou plus mince que l'épaisseur virtuelle L du dernier revêtement diélectrique de l'empilage multicouches disposé au-dessus de la couche absorbant l'infrarouge par rapport au substrat. Cette caractéristique facilite l'adaptation des effets d'interférence. De préférence, l'épaisseur virtuelle L du premier revêtement diélectrique, disposée entre le substrat et la couche absorbant le rayonnement solaire, est au moins une fois et demi plus mince, avantageusement deux fois, et préférentiellement trois fois, plus mince que l'épaisseur virtuelle L du dernier revêtement diélectrique de l'empilage multicouches disposé au-dessus de la couche absorbant l'infrarouge par rapport au substrat.

Comme déjà indiqué ci-avant, un des matériaux diélectriques préférés pour former les dits revêtements diélectriques, et en particulier le second revêtement disposé au-dessus de la couche fonctionnelle, est le nitrure de silicium qui a un indice de réfraction compris entre 1,9 et 2,05. Toutefois, comme déjà expliqué également, le revêtement diélectrique peut inclure des couches d'autres matériaux diélectriques que le nitrure de silicium. De préférence, le revêtement en matériau diélectrique disposé au-dessus de la couche absorbant le rayonnement solaire comprend un matériau ayant un indice de réfraction élevé, supérieur à 2, et avantageusement supérieur à 2,1. Dans le cadre de la présente invention, ce diélectrique à haut indice de réfraction est de préférence un matériau qui supporte le traitement thermique sans modification structurelle significative. Un exemple spécifique d'un tel matériau est de l'oxyde de titane dopé ou en mélange, par exemple avec du zirconium ou du niobium, notamment un mélange d'oxyde de titane et d'oxyde de zirconium à raison de 40 à 60% chacun. Un autre exemple d'un tel matériau est l'oxyde de zirconium. De préférence, ce matériau à haut indice est disposé entre la couche absorbant le rayonnement solaire et la couche diélectrique la plus extérieure de l'empilage.

La couche absorbant le rayonnement solaire peut être un nitrure, tel que TiN, CrN, WN, NbN, TaN, ZrN ou NiCrN, ou un mélange de ces nitrures. Ces nitrures peuvent aussi être partiellement oxydés. De préférence, la couche absorbant le rayonnement solaire est une couche essentiellement métallique, tel que NiCr, W, Nb, Zr, Ta, l'inox, ou des alliages à base de Ni et/ou de Cr.

De préférence, la couche absorbant le rayonnement solaire est une couche métallique à base d'un métal ayant un coefficient d'extinction k compris entre 2 et 4,5 dans la gamme du spectre visible allant de 380 nm à 750 nm.

De préférence, la couche absorbant le rayonnement solaire est une couche d'un alliage à base NiCr et de W, un alliage à base de Cr et de Zr, un alliage à base de W et de Zr ou Cr, ou un alliage à base de W et de Ta. Ces alliages se sont avérés très avantageux pour former des couches absorbant le rayonnement solaire qui supportent aisément le traitement thermique à haute température sans détérioration significative de leurs propriétés. Ces alliages peuvent inclurent également un métal supplémentaire sélectionné parmi Ti, Nb, Ta, Ni et Sn.

Selon certains exemples préférés de mise en œuvre de l'invention, la couche absorbant le rayonnement solaire est une couche d'un alliage NiCrW entourée d'un premier revêtement diélectrique formé essentiellement de nitrure de silicium d'une épaisseur géométrique comprise entre 10 et 20 nm et d'un second revêtement diélectrique formé essentiellement de nitrure de silicium d'une épaisseur géométrique comprise entre 50 et 65 nm. Selon d'autres exemples préférés, la couche absorbant le rayonnement solaire est une couche d'un alliage NiCr entourée d'un premier revêtement diélectrique formé essentiellement de nitrure de silicium d'une épaisseur géométrique comprise entre 10 et 20 nm et d'un second revêtement diélectrique formé essentiellement de nitrure de silicium d'une épaisseur géométrique comprise entre 55 et 60 nm. Selon encore d'autres exemples préférés, la couche absorbant le rayonnement solaire est une couche d'un alliage CrZr entourée d'un premier revêtement diélectrique formé essentiellement de nitrure de silicium d'une épaisseur géométrique comprise entre 10 et 20 nm et d'un second revêtement diélectrique formé essentiellement de nitrure de silicium d'une épaisseur géométrique comprise entre 60 et 66 nm.

De préférence, la couche absorbant le rayonnement solaire a une épaisseur géométrique comprise entre 3 et 40 nm, voire entre 3 et 30 nm, de préférence comprise entre 5 et 25 nm. De préférence, la couche absorbant le rayonnement solaire a de préférence une épaisseur géométrique comprise entre 10 et 25 nm, et avantageusement comprise entre 12 et 22 nm. Une telle couche absorbant le rayonnement solaire est adéquate pour constituer la couche fonctionnelle de l'empilage multicouches, c'est-à-dire la couche fondamentale pour l'obtention des propriétés de contrôle solaire. On peut obtenir ainsi aisément un empilage multicouches extrêmement simple et très résistant.

De préférence, les deux revêtements diélectriques enserrant la couche absorbant le rayonnement solaire sont à base de nitrure de silicium ou de nitrure d'aluminium. Ceci assure une très bonne protection de la couche métallique absorbant le rayonnement solaire pendant le traitement thermique à température élevée.

D'autres couches additionnelles peuvent être ajoutées, soit directement sur le substrat, soit en tant que couche externe de protection, soit à l'intérieur de l'empilage de l'empilage multicouches, afin de procurer à l'empilage multicouches de base des propriétés et/ou des protections supplémentaires, telles que par exemple une protection externe supplémentaire contre les agressions mécaniques ou chimiques, par exemple formée par une mélange d'oxyde de titane et d'oxyde de zirconium, une barrière contre les alcali provenant du substrat, des propriétés optiques différentes, une amélioration des propriétés électriques des couches métalliques, une amélioration du taux de dépôt, ou toute fonctions supplémentaires. Les couches additionnelles doivent toutefois de préférence être choisies afin qu'elles ne perturbent pas l'aptitude de l'empilage multicouches à subir un traitement thermique à haute température. En particulier, on veillera avantageusement à ce que ces couches additionnelles ne subissent pas de modifications substantielles, et notamment des modifications de structure, lors du traitement thermique pour éviter qu'elles n'entraînent des modifications des propriétés optiques de l'empilage multicouches au cours du traitement thermique.

Les traitements thermiques, notamment de type bombage/trempe, peuvent aussi induire des modifications plus ou moins sensibles des propriétés optiques et notamment des teintes. Préférentiellement, ces variation doivent être minimisées de telle sorte que traités ou non thermiquement les vitrages présentent une apparence pratiquement inchangée.

Traditionnellement la mesure des variations s'effectue à partir des coordonnées du système CIELAB. La variation est exprimée par l'expression notée ΔE*, expression correspondant à la formule :

$$\Delta E^* = (\Delta L^{*2} + \Delta a^{*2} + \Delta b^{*2})^{1/2}$$

Où ΔL* représente la différence entre les coordonnées colorimétriques L* du vitrage avant et après traitement thermique,

Δa* représente la différence entre les coordonnées colorimétriques a* du vitrage avant et après traitement thermique,

Δb* représente la différence entre les coordonnées colorimétriques b* du vitrage avant et après traitement thermique,

Plus particulièrement, et de préférence, le vitrage selon l'invention présente une variation colorimétrique en réflexion côté face substrat, ΔE*_{rg} :

$$\Delta E^*_{rg} = (\Delta L^*_{rg}{}^2 + \Delta a^*_{rg}{}^2 + \Delta b^*_{rg}{}^2)^{1/2}$$

inférieure à 8, préférentiellement inférieure à 5, avantageusement inférieure à 3, et même préférentiellement inférieure à 2, lorsque ledit vitrage est soumis à une température d'au moins 630°C et d'au plus 670°C pendant 7 minutes.

L'invention est particulièrement utile pour l'obtention d'une très bonne stabilité de la teinte en réflexion côté substrat lors d'un traitement thermique à température élevée de trempe et/ou bombage. La teinte en réflexion côté substrat est, dans beaucoup d'applications, la teinte la plus remarquée d'un observateur, car c'est cette face qui attire son attention selon les conditions d'utilisation du vitrage. La moindre différence de teinte est donc plus facilement apparente.

De manière additionnelle, le vitrage selon l'invention présente aussi, de préférence, une variation colorimétrique en transmission, ΔE*_{tr}:

$$\Delta E^*_{tr} = (\Delta L^*_{tr}{}^2 + \Delta a^*_{tr}{}^2 + \Delta b^*_{tr}{}^2)^{1/2}$$

inférieure à 8, préférentiellement inférieure à 5, plus préférentiellement inférieure à 3, lorsque ledit vitrage est soumis à une température d'au moins 630°C et d'au plus 670°C pendant 7 minutes.

Le vitrage selon l'invention présente de manière additionnelle ou non au deux propriétés précédentes, une variation colorimétrique en réflexion côté face couche, ΔE*_{rc}, telle que :

$$\Delta E^*_{rc} = (\Delta L^*_{rc}{}^2 + \Delta a^*_{rc}{}^2 + \Delta b^*_{rc}{}^2)^{1/2}$$

inférieure 8, préférentiellement inférieure à 5, lorsque ledit vitrage est soumis à une température d'au moins 630°C et d'au plus 670°C pendant 7 minutes.

Selon un mode de réalisation particulier, le vitrage selon l'invention est tel que l'épaisseur de la couche absorbant le rayonnement solaire est choisie de façon à ce que la transmission lumineuse pour un substrat constitué de verre clair de 4 mm d'épaisseur soit au moins égale à 2% et au plus égale à 75%. Dans le cas de l'utilisation en tant que toit de véhicule automobile, la transmission lumineuse sera de préférence entre 2 et 10%, avantageusement entre 6 et 8%. Dans le cas d'application en bâtiment, la transmission lumineuse sera de préférence entre 10 et 70%, avantageusement entre 10% et 60%, favorablement entre 10 et 50%, et préférentiellement entre 20 et 40%. En effet, la couche absorbant le rayonnement solaire commande les transmissions lumineuses et énergétiques, de sorte que plus celle-ci est épaisse plus elle absorbe.

Les vitrages selon l'invention trouvent des applications diverses en adaptant leurs propriétés par un ajustement des couches et notamment de leurs épaisseurs.

Les vitrages selon l'invention peuvent faire partie de vitrages doubles et dans ce cas l'empilage multicouches peut être disposé dans l'espace entre les deux feuilles de verre, ce qui limite les risques d'altération notamment mécanique. Néanmoins une des caractéristiques significative des empilages multicouches proposés pour les vitrages selon l'invention est leur résistance tant mécanique que chimique. Cette résistance est telle qu'ils peuvent être utilisés avec l'empilage multicouches exposé sans autre protection. Dans ce dernier cas le vitrage peut aussi bien se composer d'une seule feuille de verre, les empilages multicouches étant appliqués sur une face de cette feuille. Il peut aussi s'agir d'un vitrage feuilleté comprenant deux feuilles de verre, ou plus, les feuilles étant réunies au moyen de feuilles intercalaires de matériau thermoplastique suivant les techniques traditionnelles dans ce domaine.

Dans ces applications sur un vitrage unique l'empilage multicouches n'est pas protégé de l'environnement. Même dans le cas de vitrage feuilleté, les couches peuvent être sur une face externe pour qu'elles puissent jouer leur rôle dans le contrôle de transmission énergétique en agissant sur l'émissivité de la surface.

Le vitrage selon l'invention trouve donc son application comme élément vitré de véhicule automobile : toit, fenêtre latérale, lunette arrière (l'empilage multicouches étant de préférence sur la face exposée vers l'habitacle) et élément de vitrage de bâtiments.

Le vitrage selon l'invention trouve aussi son application comme élément vitré d'appareil électroménager tel qu'une porte de four, où il peut aussi apporté un effet esthétique recherché. Il résiste bien aux différentes agressions chimiques et/ou mécaniques dues à ce type particulier d'application.

Comme déjà indiqué ci-dessus à plusieurs reprises, le vitrage selon l'invention trouve bien sûr également son application comme élément vitré d'un bâtiment. Dans ce cas d'application, le vitrage peut former un vitrage double ou triple avec l'empilage multicouches disposé face à l'espace clos à l'intérieur du vitrage multiple. Le vitrage peut aussi former un vitrage feuilleté dont l'empilage multicouches peut être en contact avec la matière adhésive thermoplastique reliant les substrats, en général, du PVB. Le vitrage selon l'invention est toutefois particulièrement utile lorsque l'empilage multicouches est face à l'environnement externe, que ce soit un simple vitrage ou un vitrage feuilleté, mais aussi éventuellement un vitrage multiple.

Bien entendu, le substrat verrier peut être un verre teinté dans la masse, tel qu'un verre gris, bleu ou vert, pour absorber en plus le rayonnement solaire, ou pour former un espace privé à faible transmission lumineuse afin de dissimuler l'habitacle du véhicule, ou un bureau dans un bâtiment, aux regards externes.

## 5. Description de modes préférés de réalisation de l'invention

Des exemples de vitrages selon l'invention mais également des exemples comparatifs (« R ») sont donnés dans le tableau I ci-après. Les propriétés optiques sont définies pour des vitrages dont le substrat est en verre "float" ordinaire clair de 4 mm d'épaisseur. Les couches sont dans l'ordre, de gauche à droite, en partant du verre. Les épaisseurs géométriques approximatives sont exprimées en nm.

**Tableau I** : Exemples de vitrages selon l'invention et comparatifs des performances de vitrages selon l'invention avec des vitrages de l'art antérieur, les revêtements étant déposés sur du verre clair ayant une épaisseur de 4 mm. Les transmissions lumineuses (TL) et les réflexions lumineuses côté couche (Rc) et côté verre (Rg) sont aussi indiquées (en %) pour certains exemples.

Les couches absorbant le rayonnement solaire et les couches diélectriques sont appliquées par une technique de pulvérisation cathodique ("sputtering") dans des conditions usuelles pour ce type de technique. En variante, les couches diélectriques sont appliquées par la technique bien connue appelée PECVD (« Plasma-Enhanced Chemical Vapor Deposition ») ou dépôt chimique en phase vapeur assisté par plasma.

Les couches diélectriques de nitrure de silicium sont produites à partir de cibles métalliques dans une atmosphère constituée d'un mélange d'argon (30-70%) et d'azote (70-30%) sous une pression totale de 4mTorr (0,53Pa). Les couches de chrome-zirconium (40% en poids de Cr et 60% de zirconium dans l'alliage CrZr), les couches de nickel-chrome (Nickel/Chrome 80/20) et les couches de nickel-chrome (Nickel/Chrome 80/20)-tungstène (50% en poids de NiCr et 50% de W dans l'alliage NiCrW) sont déposées à partir de cathodes métalliques en atmosphère d'argon seul. Les couches diélectriques d'oxyde de silicium sont produites au départ d'une cible à base de silicium dans un atmosphère contenant de l'argon et de l'oxygène.

Sur les échantillons on mesure la transmission lumineuse TL et la réflexion lumineuse du côté substrat avec l'Illuminant D65, 2°. Les coordonnées colorimétriques L*, a*, b*, CIE, sont également mesurées avant et après traitement thermique ave l'Illuminant D65, 10°. L'angle sous lequel les mesures sont faites est de 8°.

Les échantillons sont soumis à un traitement thermique comprenant le maintien à 670°C pendant 8 min et 30 sec. Les variations de transmission et de réflexion en ∆E* sont également données dans le tableau I. Dans ce tableau, les notations SiN désignent les nitrures de silicium sans représenter une formule chimique, étant entendu que les produits obtenus ne sont pas nécessairement rigoureusement stœchiométriques, mais sont ceux obtenus dans les conditions de dépôt indiquées et qui sont voisins des produits stœchiométriques. Les couches en SiN peuvent contenir jusqu'à environ maximum 10% en poids d'aluminium provenant de la cible. Les couches SiN ont un indice de réfraction n=2,03 à 550 nm. Le revêtement diélectrique peut en outre être constitué de plusieurs couches individuelles comprenant ou consistant essentiellement en ces mêmes matériaux.

Les chiffres entre parenthèses sont les épaisseurs physiques en nm des différentes couches. Les propriétés (en % pour la transmission et la réflexion lumineuses) sont données en vitrage monolithique après traitement thermique. L'appellation « TZO » représente un oxyde mixte comprenant 50% de $TiO_2$ et 50% de $ZrO_2$. Les couches TZO ont un indice de réfraction n=2,3 à 550 nm.

| Ex. | Empilage multicouches | TL | Rc | Rg | $\Delta E^*_{Tl}$ | $\Delta E^*_{Rc}$ | $\Delta E^*_{Rg}$ |
|---|---|---|---|---|---|---|---|
| R1 | SiN (20)/NiCrW (8,5)/SiN (35) | 31,6 | 19,3 | 24,6 | 0,7 | 1,9 | 1,7 |
| R2 | SiN (20)/NiCrW (13,7)/SiN (35) | 19,9 | 25,7 | 32,7 | 1,3 | 1,3 | 0,9 |
| R3 | SiN (20)/NiCrW (22)/SiN (35) | 10,19 | 33 | 41,4 | 3 | 2,1 | 0,3 |
| R4 | SiN (87)/NiCrW (13,7)/SiN (30) | 20,67 | 31,9 | 21,6 | 2 | 3 | 0,8 |
| 1 | SiN (13)/CrZr (6,7)/SiN (50,6) | 33,8 | 7,4 | 34,6 | | | |
| 2 | SiN (13)/CrZr (10,3)/SiN (46,7) | 23,5 | 13,8 | 39,9 | | | |
| 3 | SiN (79,2)/CrZr (14)/SiN (50,1) | 22,2 | 15 | 30,9 | | | |
| 4 | SiN (16,4)/CrZr (7,6)/TZO (24,1)/SiN (25) | 31,3 | 8,6 | 39 | | | |
| 5 | SiN (13)/CrZr (11,6)/TZO (21,4)/SiN (25) | 21,6 | 12,7 | 44,7 | | | |
| 6 | SiN (13,4)/CrZr (21,3)/TZO (18,2)/SiN (31,3) | 10,8 | 15,7 | 51,2 | | | |
| 7 | SiN (78)/CrZr (14,7)/TZO (22,5)/SiN (25,1) | 22 | 13,4 | 33 | | | |
| 8 | SiN (15)/NiCrW (9,8)/SiN (50,6) | 32,5 | 6 | 34,6 | 0,6 | 6 | 1 |
| 9 | SiN (15)/NiCrW (15,4)/SiN (48,2) | 21,6 | 11,5 | 40,1 | 0,9 | 5,3 | 0,7 |
| 10 | SiN (15)/NiCrW (24,5)/SiN (48) | 10,5 | 17,5 | 45 | 2,1 | 3,7 | 1,5 |
| 11 | SiN (78,4)/NiCrW (18)/SiN (49,5) | 20,4 | 14,9 | 30,9 | 1,2 | 4,9 | 0,7 |
| 12 | SiN (15)/NiCrW (10,1)/TZO (29,7)/SiN (20) | 32,4 | 6,1 | 39,2 | 1,2 | 3,1 | 0,9 |
| 13 | SiN (15)/NiCrW (16,2)/TZO (27,2)/SiN (20) | 21,1 | 9,2 | 45,1 | 0,9 | 2,6 | 0,9 |
| 14 | SiN (15)/NiCrW (25)/TZO (13,2)/SiN (34,7) | 10,8 | 14,9 | 47,7 | 0,4 | 2,8 | 0,6 |
| 15 | SiN (75,4)/NiCrW (18,9)/TZO (23,7)/SiN (23,6) | 21,3 | 11,9 | 33,5 | 1,4 | 1,4 | 0,3 |

Les coordonnées colorimétriques (L*a*b* CIE) des exemples comparatifs et de certains exemples selon l'invention sont données dans le tableau II ci-dessous en réflexion côté substrat et en transmission.

**Tableau II**

| Ex. | Réflexion côté verre $R_G$ | | | Transmission | | |
|---|---|---|---|---|---|---|
| | L* | a* | b* | L* | a* | b* |
| R1 | 56,8 | -1,97 | -3,5 | 63,14 | -0,81 | -4,51 |
| R2 | 63,93 | -1,66 | -0,86 | 51,89 | -0,98 | -5,1 |
| R3 | 70,38 | -1,32 | 2,96 | 38,28 | -1,08 | -2,49 |
| R4 | 54,23 | -3,43 | -17,41 | 52,52 | -0,45 | 2,38 |
| 1 | 65,28 | -3,2 | -1,74 | 64,02 | -2,18 | -1,93 |
| 2 | 69,45 | -2,66 | -0,2 | 53,77 | -2,39 | -2 |
| 3 | 62,41 | -3,08 | -12,22 | 52,59 | -2,58 | 7,41 |

(suite)

| Ex. | Réflexion côté verre $R_G$ | | | Transmission | | |
|---|---|---|---|---|---|---|
| | L* | a* | b* | L* | a* | b* |
| 4 | 68,7 | -3,3 | -2,0 | | | |
| 5 | 72,6 | -2,7 | -1,3 | | | |
| 6 | 75,5 | -1,7 | 6 | | | |
| 7 | 64,6 | -3,1 | -11,9 | | | |

Les exemples selon l'invention ont une réflexion extérieure, vue du côté du substrat, élevée et une réflexion intérieure, vue du côté de l'empilage, faible, ce qui donne une brillance et un éclat fournissant un effet esthétique particulièrement marquant tout en conservant une réflexion intérieure faible, donc sans effet miroir, et une teinte en réflexion répondant aux critères commerciaux. On constate aussi qu'une épaisseur du second revêtement diélectrique se trouvant dans la gamme préférée permet d'obtenir plus aisément cet effet esthétique, et particulièrement avec un premier revêtement diélectrique mince. L'exemple 3 montre aussi qu'avec un premier revêtement diélectrique épais, mais en conservant un ratio élevé entre les deux revêtements diélectriques, on peut obtenir cet effet esthétique avec une teinte bleue particulièrement soutenue, comme le montre la valeur fortement négative de la coordonnée colorimétrique b*.

Les résistances mécanique et chimique des vitrages selon l'invention sont caractérisées par le passage avec succès des tests définis dans la norme EN1096-2 pour les revêtements dits de classe B. En outre, les vitrages selon l'invention satisfont également aux exigences des tests suivants :

- au brouillard salin (NSS: *Neutral Salt Spray*) selon la norme ISO 9227-2006, de préférence pendant au moins 10 jours;
- à la chambre climatique selon la norme EN1036-2008, de préférence pendant au moins 10 jours; et
- au test Cleveland selon la norme ISO 6270-1:1998, de préférence pendant au moins 10 jours;
- au test de résistance acide ($SO_2$) selon la norme EN 1096-2.
- Au test AWRT (*Automatic web rub test*) décrit ci-après : Un piston recouvert d'un tissu en coton est mis en contact avec la couche à évaluer et oscille sur sa surface. Le piston porte un poids de manière à appliquer une force de 33N sur un doigt de 17 mm de diamètre. L'abrasion du coton sur la surface revêtue va endommager (enlever) la couche après un certain nombre de cycles. Le test est utilisé pour définir la limite avant que la couche ne se décolore (enlèvement partiel de la couche) et que des griffes n'apparaissent dans la couche. Le test est réalisé pour 10, 50, 100, 250, 500 et 1000 cycles, à divers endroits séparés sur l'échantillon. L'échantillon est observé sous un ciel artificiel pour déterminer si une décoloration ou des griffes peuvent être vues sur l'échantillon. Le résultat AWRT indique le nombre de cycles ne donnant pas ou très peu de dégradation (non visible à l'œil nu sous un ciel artificiel uniforme à 80 cm de distance de l'échantillon).
- au test DBT (Dry Brush test) selon la norme ASTM D2486-00 (méthode de test "A"), de préférence pendant au moins 1000 cycles et ce avant et après éventuel traitement thermique.

Bien entendu, l'invention n'est pas limitée aux exemples de réalisation mentionnés ci-dessus.

## Revendications

**1.** Vitrage transparent de contrôle solaire comportant sur au moins l'une des faces d'un substrat verrier un empilage multicouches transparent comprenant une couche absorbant le rayonnement solaire d'au moins 3 nm d'épaisseur géométrique qui est la couche fonctionnelle de l'empilage, et des premier et second revêtements diélectriques encadrant ladite couche absorbant le rayonnement solaire, **caractérisé en ce que** la réflexion lumineuse du substrat verrier revêtu de l'empilage multicouche mesurée du côté du substrat est d'au moins 20% et est au moins le double de la réflexion lumineuse du substrat verrier revêtu de l'empilage multicouche mesurée du côté de l'empilage, **en ce que** la teinte en réflexion côté substrat présente une valeur de la coordonnée colorimétrique a* inférieure à 2 et une valeur de la coordonnée colorimétrique b* inférieure à 5, **en ce que** le second revêtement diélectrique, disposé au-delà de la couche absorbant le rayonnement solaire par rapport au substrat, a une épaisseur totale virtuelle L comprise entre 45 et 65 nm, et **en ce que** l'épaisseur virtuelle L du premier revêtement diélectrique, disposée entre le substrat et la couche absorbant le rayonnement solaire, est au moins une fois et demi plus épaisse ou plus mince que l'épaisseur virtuelle L du second revêtement diélectrique de l'empilage multicouches, L étant défini comme étant la somme des épaisseurs géométriques (physiques) en nm de chacun des matériaux diélectriques formant le revêtement diélectrique multipliées par l'indice de réfraction n à 550 nm de chacun des matériaux diminué de l'indice de réfraction du gaz de l'atmosphère environnante.

2. Vitrage selon la revendication 1, **caractérisé en ce que** la réflexion lumineuse du substrat verrier revêtu de l'empilage multicouche mesurée du côté du substrat est au moins 2,5 fois, de préférence d'au moins 3 fois, et avantageusement d'au moins 3,5 fois, supérieure à la réflexion lumineuse du substrat verrier revêtu de l'empilage multicouche mesurée du côté de l'empilage.

3. Vitrage selon l'une quelconque des revendications 1 ou 2, **caractérisé en ce que** la réflexion lumineuse mesurée côte substrat est supérieure d'au moins 14%, de préférence d'au moins 20% et avantageusement d'au moins 25%, à la réflexion lumineuse mesurée côte empilage.

4. Vitrage selon l'une quelconque des revendications précédentes, **caractérisé en ce que** la réflexion lumineuse mesurée du côté substrat est d'au moins 27%, de préférence d'au moins 30%, et avantageusement d'au moins 35%.

5. Vitrage selon l'une quelconque des revendications précédentes, **caractérisé en ce que** le second revêtement diélectrique a une épaisseur totale virtuelle L comprise entre 55 et 65 nm, et **en ce que** l'indice de réfraction n moyen du revêtement est supérieur à 1,5.

6. Vitrage selon l'une quelconque des revendications précédentes, **caractérisé en ce que** l'épaisseur virtuelle L du premier revêtement diélectrique est au moins une fois et demi plus mince, de préférence deux fois, et avantageusement trois fois, plus mince que l'épaisseur virtuelle L du second revêtement diélectrique de l'empilage multicouches.

7. Vitrage selon l'une quelconque des revendications précédentes, **caractérisé en ce que** le second revêtement diélectrique comprend un matériau ayant un indice de réfraction élevé, supérieur à 2, de préférence supérieur à 2,1.

8. Vitrage selon la revendication 7, **caractérisé en ce que** le second revêtement diélectrique comprend un mélange d'oxyde de titane et d'oxyde de zirconium ou de niobium.

9. Vitrage selon l'une quelconque des revendications précédentes, **caractérisé en ce que** la couche absorbant le rayonnement solaire est formée d'un matériau ayant un coefficient d'extinction moyen, entre 380 nm et 750 nm, supérieur à 1,2, et de préférence supérieur à 1,4.

10. Vitrage selon l'une quelconque des revendications précédentes, **caractérisé en ce que** la couche absorbant le rayonnement solaire comprend un alliage à base NiCr et de W, un alliage à base de Cr et de Zr, un alliage à base de W et de Zr, ou un alliage à base de W et de Ta.

11. Vitrage selon l'une quelconque des revendications précédentes, **caractérisé en ce que** la couche absorbant le rayonnement solaire a une épaisseur géométrique comprise entre 3 et 40 nm, de préférence comprise entre 5 et 25 nm.

12. Vitrage selon la revendication 11, **caractérisé en ce que** la couche absorbant le rayonnement solaire a une épaisseur géométrique comprise entre 10 et 25 nm, et de préférence comprise entre 12 et 22 nm.

13. Vitrage selon l'une quelconque des revendications précédentes, **caractérisé en ce que** les deux revêtements diélectriques enserrant la couche absorbant le rayonnement solaire sont à base de nitrure de silicium ou de nitrure d'aluminium.

14. Vitrage selon l'une quelconque des revendications précédentes, dont la variation colorimétrique en transmission, $\Delta E^*_{tr}$ est inférieure à 8, préférentiellement est inférieure à 5, plus préférentiellement est inférieure à 3, lorsque ledit vitrage est soumis à une température d'au moins 630°C et d'au plus 670°C pendant 7 minutes.

15. Vitrage selon l'une quelconque des revendications précédentes dont la variation colorimétrique en réflexion côté face du substrat, $\Delta E^*_{rg}$ est inférieure 8, préférentiellement est inférieure à 5, plus préférentiellement est inférieure à 3, lorsque ledit vitrage est soumis à une température d'au moins 630°C et d'au plus 670°C pendant 7 minutes.

**16.** Utilisation d'un vitrage de contrôle solaire selon une quelconque des revendications précédentes comme élément vitré de véhicule automobile, comme élément de vitrage de bâtiments ou comme élément vitré d'un appareil électroménager tel qu'une porte de four de cuisson.

**Patentansprüche**

**1.** Transparente Sonnenschutzverglasung, die auf mindestens einer der Seiten eines Glassubstrats einen transparenten Mehrschichtstapel beinhaltet, der eine Sonnenstrahlung absorbierende Schicht von mindestens 3 nm geometrischer Dicke, welche die Funktionsschicht des Stapels ist, und einen ersten und einen zweiten dielektrischen Überzug, welche die Sonnenstrahlung absorbierende Schicht einrahmen, umfasst, **dadurch gekennzeichnet, dass** die substratseitig gemessene Lichtreflexion des mit dem Mehrschichtstapel überzogenen Glassubstrats mindestens 20 % beträgt und mindestens das Zweifache der stapelseitig gemessenen Lichtreflexion des mit dem Mehrschichtstapel überzogenen Glassubstrats ist, dass der substratseitige Farbton in Reflexion einen Farbkoordinatenwert a* von weniger als 2 und einen Farbkoordinatenwert b* von weniger als 5 aufweist, dass der zweite dielektrische Überzug, der bezogen auf das Substrat jenseits der Sonnenstrahlung absorbierenden Schicht angeordnet ist, eine virtuelle Gesamtdicke L zwischen 45 und 65 nm hat und dass die virtuelle Dicke L des ersten dielektrischen Überzugs, der zwischen dem Substrat und der Sonnenstrahlung absorbierenden Schicht angeordnet ist, mindestens eineinhalb Mal dicker oder dünner als die virtuelle Dicke L des zweiten dielektrischen Überzugs des Mehrschichtstapels ist, wobei L als die Summe der geometrischen (physischen) Dicken in nm jedes der den dielektrischen Überzug bildenden dielektrischen Materialien multipliziert mit dem Brechungsindex n bei 550 nm jedes der Materialien abzüglich des Brechungsindexes des Gases der umgebenden Atmosphäre definiert ist.

**2.** Verglasung nach Anspruch 1, **dadurch gekennzeichnet, dass** die substratseitig gemessene Lichtreflexion des mit dem Mehrschichtstapel überzogenen Glassubstrats mindestens 2,5 Mal, bevorzugt mindestens 3 Mal und vorteilhafterweise mindestens 3,5 Mal stärker als die stapelseitig gemessene Lichtreflexion des mit dem Mehrschichtstapel überzogenen Glassubstrats ist.

**3.** Verglasung nach einem der Ansprüche 1 oder 2, **dadurch gekennzeichnet, dass** die substratseitig gemessene Lichtreflexion um mindestens 14 %, bevorzugt um mindestens 20 % und vorteilhafterweise um mindestens 25 % stärker als die stapelseitig gemessene Lichtreflexion ist.

**4.** Verglasung nach einem der vorhergehenden Ansprüche, **dadurch gekennzeichnet, dass** die substratseitig gemessene Lichtreflexion mindestens 27 %, bevorzugt mindestens 30 % und vorteilhafterweise mindestens 35 % beträgt.

**5.** Verglasung nach einem der vorhergehenden Ansprüche, **dadurch gekennzeichnet, dass** der zweite dielektrische Überzug eine virtuelle Gesamtdicke L zwischen 55 und 65 nm hat und dass der mittlere Brechungsindex n des Überzugs größer als 1,5 ist.

**6.** Verglasung nach einem der vorhergehenden Ansprüche, **dadurch gekennzeichnet, dass** die virtuelle Dicke L des ersten dielektrischen Überzugs mindestens eineinhalb Mal dünner, bevorzugt zwei Mal und vorteilhafter drei Mal dünner als die virtuelle Dicke L des zweiten dielektrischen Überzugs des Mehrschichtstapels ist.

**7.** Verglasung nach einem der vorhergehenden Ansprüche, **dadurch gekennzeichnet, dass** der zweite dielektrische Überzug ein Material mit einem hohen Brechungsindex von mehr als 2, bevorzugt mehr als 2,1 umfasst.

**8.** Verglasung nach Anspruch 7, **dadurch gekennzeichnet, dass** der zweite dielektrische Überzug ein Gemisch aus Titanoxid und aus Zirconium- oder Nioboxid umfasst.

**9.** Verglasung nach einem der vorhergehenden Ansprüche, **dadurch gekennzeichnet, dass** die Sonnenstrahlung absorbierende Schicht aus einem Material gebildet ist, das einen mittleren Extinktionskoeffizienten zwischen 380 nm und 750 nm von mehr als 1,2 und bevorzugt mehr als 1,4 hat.

**10.** Verglasung nach einem der vorhergehenden Ansprüche, **dadurch gekennzeichnet, dass** die Sonnenstrahlung absorbierende Schicht eine Legierung auf der Basis von NiCr und W, eine Legierung auf der Basis von Cr und Zr, eine Legierung auf der Basis von W und Zr oder eine Legierung auf der Basis von W und Ta umfasst.

**11.** Verglasung nach einem der vorhergehenden Ansprüche, **dadurch gekennzeichnet, dass** die Sonnenstrahlung absorbierende Schicht eine geometrische Dicke zwischen 3 und 40 nm, bevorzugt zwischen 5 und 25 nm hat.

**12.** Verglasung nach Anspruch 11, **dadurch gekennzeichnet, dass** die Sonnenstrahlung absorbierende Schicht eine geometrische Dicke zwischen 10 und 25 nm, bevorzugt zwischen 12 und 22 nm hat.

**13.** Verglasung nach einem der vorhergehenden Ansprüche, **dadurch gekennzeichnet, dass** die beiden dielektrischen Überzüge, welche die Sonnenstrahlung absorbierende Schicht umspannen, auf der Basis von Siliciumnitrid oder Aluminiumnitrid sind.

**14.** Verglasung nach einem der vorhergehenden Ansprüche, deren Farbabstand in Transmission $\Delta E^*_{tr}$ kleiner als 8 ist, bevorzugt kleiner als 5 ist, noch bevorzugter kleiner als 3 ist, wenn die Verglasung 7 Minuten lang einer Temperatur von mindestens 630 °C und höchstens 670 °C ausgesetzt wird.

**15.** Verglasung nach einem der vorhergehenden Ansprüche, deren Farbabstand in Reflexion $\Delta E^*_{rg}$ substratseitig kleiner als 8 ist, bevorzugt kleiner als 5 ist, noch bevorzugter kleiner als 3 ist, wenn die Verglasung 7 Minuten lang einer Temperatur von mindestens 630 °C und höchstens 670 °C ausgesetzt wird.

**16.** Verwendung einer Sonnenschutzverglasung nach einem der vorhergehenden Ansprüche als Glaselement eines Kraftfahrzeugs, als Verglasungselement von Gebäuden oder als Glaselement eines Hausgeräts wie eine Backofentür.

**Claims**

**1.** Transparent solar-control glazing comprising on at least one of the faces of a glass substrate a transparent multilayer stack comprising a layer that absorbs solar radiation with a geometric thickness of at least 3 nm which is the functional layer of the stack, and first and second dielectric coatings flanking said layer that absorbs solar radiation, **characterized in that** the light reflection of the glass substrate coated with the multilayer stack as measured on the substrate side is at least 20% and is at least double the light reflection of the glass substrate coated with the multilayer stack as measured on the stack side, and **in that** the colour in reflection on the substrate side has an a* colour coordinate value of less than 2 and a b* colour coordinate value of less than 5, **in that** the second dielectric coating, which is placed beyond the layer that absorbs solar radiation relative to the substrate, has a total virtual thickness L of between 45 and 65 nm, and **in that** the virtual thickness L of the first dielectric coating, which is placed between the substrate and the layer that absorbs solar radiation, is at least one and a half times thicker or thinner than the virtual thickness L of the second dielectric coating of the multilayer stack, L being defined as being the sum of the (physical) geometric thicknesses, in nm, of each of the dielectric materials forming the dielectric coating multiplied by the refractive index n at 550 nm of each of the materials minus the refractive index of the gas of the surrounding atmosphere.

**2.** Glazing according to Claim 1, **characterized in that** the light reflection of the glass substrate coated with the multilayer stack as measured on the substrate side is at least 2.5 times, preferably at least 3 times, and advantageously at least 3.5 times higher than the light reflection of the glass substrate coated with the multilayer stack as measured on the stack side.

**3.** Glazing according to either one of Claims 1 and 2, **characterized in that** the light reflection measured on the substrate side is greater by at least 14%, preferably by at least 20% and advantageously by at least 25%, than the light reflection measured on the stack side.

**4.** Glazing according to any one of the preceding claims, **characterized in that** the light reflection measured on the substrate side is at least 27%, preferably at least 30% and advantageously at least 35%.

**5.** Glazing according to any one of the preceding claims, **characterized in that** the second dielectric coating has a total virtual thickness L of between 55 and 65 nm, and **in that** the average refractive index n of the coating is greater than 1.5.

**6.** Glazing according to any one of the preceding claims, **characterized in that** the virtual thickness L of the first dielectric coating is at least one and a half times thinner, preferably two times, and advantageously three times thinner than the virtual thickness L of the second dielectric coating of the multilayer stack.

7. Glazing according to any one of the preceding claims, **characterized in that** the second dielectric coating comprises a material having a high refractive index, greater than 2, preferably greater than 2.1.

8. Glazing according to Claim 7, **characterized in that** the second dielectric coating comprises a mixture of titanium oxide and of zirconium oxide or niobium oxide.

9. Glazing according to any one of the preceding claims, **characterized in that** the layer that absorbs solar radiation is formed of a material having an average extinction coefficient, between 380 nm and 750 nm, of greater than 1.2 and preferably greater than 1.4.

10. Glazing according to any one of the preceding claims, **characterized in that** the layer that absorbs solar radiation comprises an alloy based on NiCr and W, an alloy based on Cr and Zr, an alloy based on W and Zr, or an alloy based on W and Ta.

11. Glazing according to any one of the preceding claims, **characterized in that** the layer that absorbs solar radiation has a geometric thickness of between 3 and 40 nm, preferably between 5 and 25 nm.

12. Glazing according to Claim 11, **characterized in that** the layer that absorbs solar radiation has a geometric thickness of between 10 and 25 nm, and preferably between 12 and 22 nm.

13. Glazing according to any one of the preceding claims, **characterized in that** the two dielectric coatings flanking the layer that absorbs solar radiation are based on silicon nitride or aluminium nitride.

14. Glazing according to any one of the preceding claims, the colour change in transmission $\Delta E^*_{tr}$ of which is less than 8, preferentially is less than 5, more preferentially is less than 3, when said glazing is subjected to a temperature of at least 630°C and of at most 670°C for 7 minutes.

15. Glazing according to any one of the preceding claims, the colour change in reflection on the substrate-facing side $\Delta E^*_{rg}$ of which is less than 8, preferentially is less than 5, and more preferentially is less than 3, when said glazing is subjected to a temperature of at least 630°C and of at most 670°C for 7 minutes.

16. Use of a solar-control glazing according to any one of the preceding claims as a glazed element of a motor vehicle, as a glazing element of buildings or as a glazed element of a household appliance, such as an oven door for example.

**EP 3 013 763 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 779255 A1
- US 6852419 B2
- FR 2869606 A1
- WO 2012095380 A
- US 20060046089 A
- FR 2799005